# EUROPÄISCHE PATENTANMELDUNG

(11) **EP 4 706 363 A1**
(43) Veröffentlichungstag der Anmeldung: **11.03.2026**
(21) Anmeldenummer: 25201031.9
(22) Anmeldetag: 09.09.2025
(51) Int. Cl.: A01B 71/06, A01D 67/00, A01D 69/00

(54) **LANDWIRTSCHAFTLICHE ERNTEVORRICHTUNG**

(30) Priorität: 10.09.2024 DE 102024126014
(71) Anmelder: CLAAS Saulgau GmbH, 88348 Bad Saulgau (DE)
(72) Erfinder: Birkhofer, Stefan, 78333 Stockach (DE); Sauter, Stefan, 88529 Zwiefalten (DE)

(57) **Zusammenfassung**

Landwirtschaftliche Erntevorrichtung (10), mit einer Deichsel (11), die an einen Rahmen oder ein Gestell der Erntevorrichtung (10), an welchem mehrere hydraulisch aktuierbare Einrichtungen wie Hydraulikzylinder und/oder Hydraulikmotoren angreifen, koppelbar ist, mit einem Ankoppelbock (12), über welchen die Erntevorrichtung (10) an ein Zugfahrzeug zum ziehenden Fortbewegen durch das Zugfahrzeug koppelbar ist, wobei die Deichsel (11) gegenüber dem Ankoppelbock (12) um eine Schwenkachse (14) schwenkbar ist, mit einem am Ankoppelbock (12) angreifenden Winkelgetriebe (18), welches antriebsseitig über eine Gelenkwelle (17) an eine Zapfwelle des Zugfahrzeugs ankoppelbar ist, und welches abtriebsseitig über eine Abtriebswelle (19) an ein an der Deichsel (11) angreifendes Verteilergetriebe (20) gekoppelt ist, über welches mehrere an der Deichsel (11) angreifende Hydraulikpumpen (21) antreibbar sind, um die hydraulisch aktuierbaren Einrichtungen mit Hydrauliköl zu versorgen, wobei das Verteilergetriebe (20) ein Getriebegehäuse (22) aufweist, wobei in dem Getriebegehäuse (22) Zahnräder des Verteilergetriebes (20) angeordnet sind, und wobei das Getriebegehäuse (22) von Hydrauliköl durchströmbar ist, nämlich stromabwärts eines Hydraulikölspeichers und stromaufwärts der Hydraulikpumpen. Fig. 3

## Beschreibung

Die Erfindung betrifft eine landwirtschaftliche Erntevorrichtung.

Aus der Praxis sind landwirtschaftliche Erntevorrichtungen bekannt, die an ein Zugfahrzeug angekoppelt werden können, um mithilfe des Zugfahrzeugs ziehend, also durch das Zugfahrzeug gezogen, fortbewegt werden können. Bei solchen ziehend durch ein Zugfahrzeug fortbewegten landwirtschaftlichen Erntevorrichtungen handelt es sich insbesondere um Futtererntevorrichtungen, wie zum Beispiel Schwader oder Wender.

An einer solchen landwirtschaftlichen Erntevorrichtung, nämlich an einem Rahmen oder Gestell derselben, sind typischerweise mehrere hydraulisch aktuierbare Einrichtungen, wie Hydraulikzylinder und/oder Hydraulikmotoren, befestigt. Dies ist insbesondere bei einer als Merger oder Pickup-Band-Schwader ausgebildeten Erntevorrichtung der Fall, bei welcher sowohl die Pickups als auch die Transportbänder mithilfe von Hydraulikmotoren angetrieben werden. Die hydraulisch aktuierbaren Einrichtungen müssen sicher und zuverlässig mit Hydrauliköl versorgt werden.

Hiervon ausgehend liegt der vorliegenden Erfindung die Aufgabe zugrunde, eine landwirtschaftliche Erntevorrichtung bereitzustellen, deren hydraulisch aktuierbare Einrichtungen sicher und zuverlässig mit Hydrauliköl versorgt werden können.

Diese Aufgabe wird durch eine landwirtschaftliche Erntevorrichtung nach Anspruch 1 gelöst.

Die erfindungsgemäße landwirtschaftliche Erntevorrichtung weist eine Deichsel auf, die an einen Rahmen oder ein Gestell der Erntevorrichtung, an welchem mehrere hydraulisch aktuierbare Einrichtungen wie Hydraulikzylinder und/oder Hydraulikmotoren angreifen, koppelbar ist.

Die erfindungsgemäße landwirtschaftliche Erntevorrichtung weist ferner einen Ankoppelbock auf, über welchen die Erntevorrichtung an ein Zugfahrzeug zum ziehenden Fortbewegen durch das Zugfahrzeug ankoppelbar ist, wobei die Deichsel gegenüber dem Ankoppelbock um eine Schwenkachse schwenkbar ist.

Die erfindungsgemäße landwirtschaftliche Erntevorrichtung weist ferner ein am Ankoppelbock angreifendes Winkelgetriebe auf, welches antriebsseitig über eine Gelenkwelle an eine Zapfwelle des Zugfahrzeugs ankoppelbar ist, und welches abtriebsseitig über eine Abtriebswelle an ein an der Deichsel angreifendes Verteilergetriebe gekoppelt ist, über welches mehrere an der Deichsel angreifende Hydraulikpumpen antreibbar sind, um die hydraulisch aktuierbaren Einrichtungen mit Hydrauliköl zu versorgen.

Das Verteilergetriebe der erfindungsgemäßen landwirtschaftlichen Erntevorrichtung weist ein Getriebegehäuse auf, wobei in dem Getriebegehäuse Zahnräder des Verteilergetriebes angeordnet sind, und wobei das Getriebegehäuse von Hydrauliköl durchströmbar ist, nämlich stromabwärts eines Hydraulikölspeichers der Erntevorrichtung und stromaufwärts der Hydraulikpumpen der Erntevorrichtung.

Bei der erfindungsgemäßen landwirtschaftlichen Erntevorrichtung können die hydraulisch aktuierbaren Einrichtungen derselben ausgehend von den Hydraulikpumpen sicher und zuverlässig mit Hydrauliköl versorgt werden. Da das Verteilergetriebe sowie die Hydraulikpumpen an der Deichsel der landwirtschaftlichen Erntevorrichtung angreifen bzw. an derselben befestigt sind, stellt sich im Betrieb keine Relativbewegung zwischen diesen Baugruppen und damit auch von Hydraulikschläuchen ein, die zur Förderung des Hydrauliköls in Richtung auf die Hydraulikpumpen und ausgehend von den Hydraulikpumpen in Richtung auf die hydraulisch aktuierbaren Einrichtungen genutzt werden.

Vorzugsweise weist das Getriebegehäuse des Verteilergetriebes eine erste Kammer auf, in der Zahnräder des Verteilergetriebes angeordnet, wobei das Getriebegehäuse des Verteilergetriebes ferner eine zweite Kammer aufweist, die von Hydrauliköl durchströmbar ist.

Die von Hydrauliköl durchströmbare zweite Kammer weist vorzugsweise mindestens zwei Ausgänge auf, an welche Hydraulikpumpen anschließbar sind. Besonders bevorzugt weist die von Hydrauliköl durchströmbare zweite Kammer für jede Hydraulikölpumpe einen separaten Ausgang für Hydrauliköl oder Hydraulikfluid auf.

Durch die Unterbringung der von Hydrauliköl durchströmbaren zweiten Kammer im Getriebegehäuse kann besonders vorteilhaft auf einen separaten Ölverteiler verzichtet werden, wodurch Bauraum eingespart wird.

Insbesondere sind die erste Kammer des Getriebegehäuse des Verteilergetriebes und die zweite Kammer des Getriebegehäuse des Verteilergetriebes strömungsseitig gekoppelt, insbesondere derart, dass das über das Getriebegehäuse des Verteilergetriebes zu den Hydraulikpumpen strömende und ausgehend von dem Getriebegehäuse auf die Hydraulikpumpen verteilte Hydrauliköl zur Kühlung und/oder Schmierung des Verteilergetriebes über die Zahnräder des Verteilergetriebes strömt. Dies ist besonders bevorzugt, um das Hydrauliköl nicht nur zur Aktuierung der hydraulisch aktuierbaren Einrichtungen zu nutzen, sondern zusätzlich auch zur Kühlung und/oder Schmierung des Verteilergetriebes.

Vorzugsweise verläuft die am Winkelgetriebe angreifende Gelenkwelle senkrecht zu der am Winkelgetriebe angreifenden Abtriebswelle. Die am Winkelgetriebe angreifenden Abtriebswelle verläuft koaxial zur Schwenkachse zwischen Deichsel und Ankoppelbock. Auch hierdurch kann sichergestellt werden, dass sich im Betrieb keine Relativbewegung zwischen dem Verteilergetriebe sowie den Hydraulikpumpen ausbildet.

Vorzugsweise greifen die Hydraulikpumpen unterhalb des Getriebegehäuses an der Deichsel an. Diese Ausführung ist besonders bauraumsparend und stellt sicher, dass sich im Betrieb keine Relativbewegung zwischen dem Verteilergetriebe sowie den Hydraulikpumpen ausbildet.

Vorzugsweise ist die landwirtschaftliche Erntevorrichtung eine Futtererntemaschine, insbesondere ein Merger oder Pickup-Band-Schwader. Die Erfindung kommt insbesondere bei einem Merger bzw. Pickup-Band-Schwader zum Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnungen näher erläutert. Dabei zeigt:
- Fig. 1: eine perspektivische Ansicht eines Ausschnitts aus einer landwirtschaftlichen Erntevorrichtung im Bereich einer Deichsel und eines Ankoppelbocks;
- Fig. 2: eine Seitenansicht der landwirtschaftlichen Erntevorrichtung der Fig. 1;
- Fig. 3: einen Querschnitt durch Fig. 2;

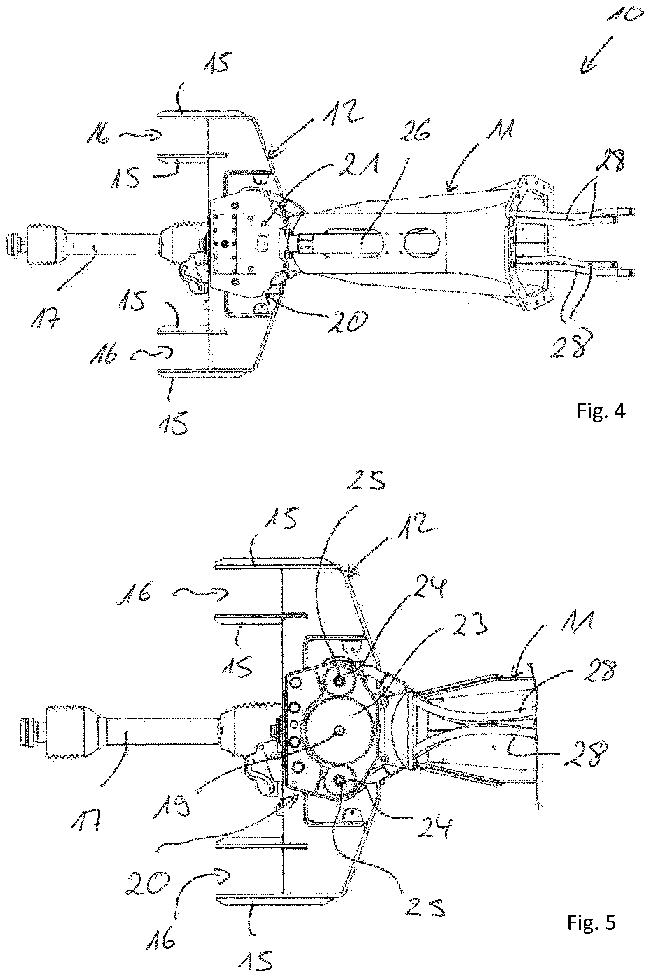

- Fig. 4: eine Draufsicht der landwirtschaftlichen Erntevorrichtung der Fig. 1;
- Fig. 5: einen Querschnitt durch Fig. 4.

Die hier vorliegende Erfindung betrifft eine landwirtschaftliche Erntevorrichtung 10. Bei der landwirtschaftlichen Erntevorrichtung 10 handelt es sich insbesondere um eine Futtererntemaschine, die zur ziehenden Fortbewegung durch ein Zugfahrzeug an ein Zugfahrzeug angekoppelt werden kann.

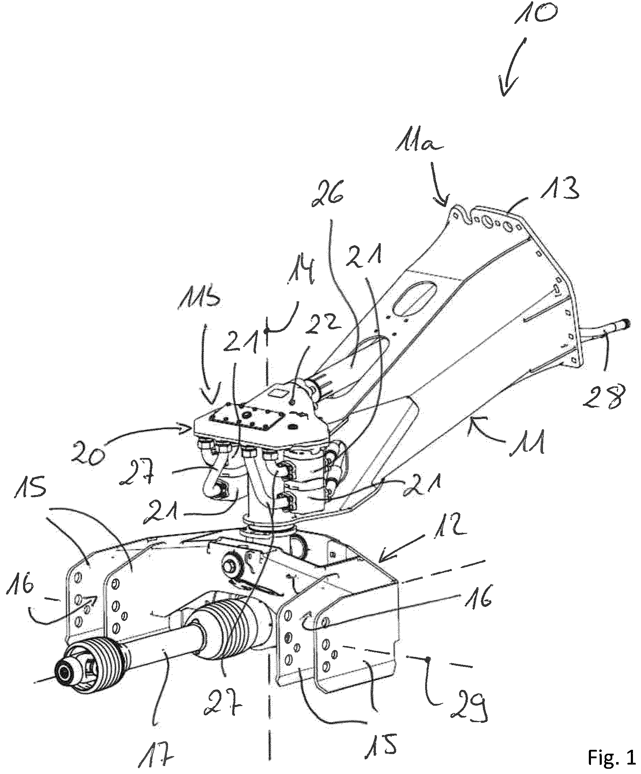

Fig. 1 zeigt einen Ausschnitt aus der erfindungsgemäßen landwirtschaftlichen Erntevorrichtung 10 im Bereich einer Deichsel 11 und eines Ankoppelbocks 12. Die Deichsel 11 weist an einem ersten Ende 11a einen Flansch 13 auf, über welchen die Deichsel 13 an einen Rahmen oder ein Gestell (nicht gezeigt) der Erntevorrichtung 10 ankoppelbar ist.

An dem Rahmen oder Gestell der Erntevorrichtung 10 greifen mehrere hydraulisch aktuierbare Einrichtungen (nicht gezeigt) an, bei welchen es sich um Hydraulikzylinder und/oder Hydraulikmotoren handelt und die zum Betrieb mit Hydrauliköl versorgt werden.

An einem dem ersten Ende 11a gegenüberliegenden zweiten Ende 11b der Deichsel 11 ist die Deichsel 11 schwenkbar mit dem Ankoppelbock 12 verbunden. Eine Schwenkachse 14 zwischen Deichsel 13 und Ankoppelbock 14 erstreckt sich in vertikaler Richtung.

Der Ankoppelbock 12 dient dem Ankoppeln der Erntevorrichtung 10 an ein nicht gezeigtes Zugfahrzeug, um die Erntevorrichtung 10 durch das Zugfahrzeug ziehend fortzubewegen. Zum Ankoppeln der Erntevorrichtung 10 an das nicht gezeigte Zugfahrzeug sind nicht gezeigte Unterlenker des Zugfahrzeugs in zwischen Laschen 15 des Ankoppelbocks 12 ausgebildete Taschen 16 einführbar. Im Betrieb ist eine Relativbewegung zwischen den Unterlenkern des Zugfahrzeugs und dem Ankoppelbock 12 um eine Achse 29 möglich, die sich horizontal in Querrichtung der Erntevorrichtung 10 bzw. senkrecht zu einer Zugrichtung der Erntevorrichtung 10 erstreckt.

Neben dieser mechanischen Ankopplung der Erntevorrichtung 10 an das Zugfahrzeug über den Ankoppelbock 12 ist die Erntevorrichtung 10 über eine Gelenkwelle 17 antriebsseitig an das nicht gezeigte Zugfahrzeug ankoppelbar, nämlich an eine nicht gezeigte Zapfwelle des Zugfahrzeugs. Die Gelenkwelle 17 erstreckt sich horizontal in Längsrichtung der Erntevorrichtung 10 bzw. Zugrichtung der Erntevorrichtung 10.

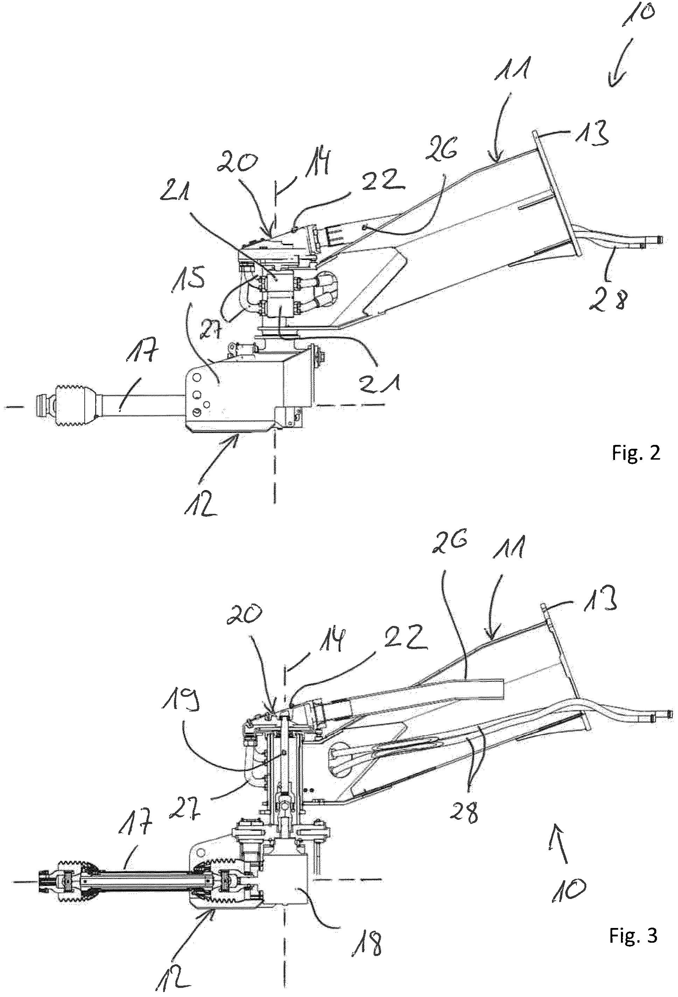

Am Ankoppelbock 12 greift ein Winkelgetriebe 18 (siehe Fig. 3) an. Das Winkelgetriebe 18 ist antriebsseitig über die Gelenkwelle 17 an die nicht gezeigte Zapfwelle des nicht gezeigten Zugfahrzeugs ankoppelbar. Abtriebsseitig ist das Winkelgetriebe 18 über eine Abtriebswelle 19 an ein an der Deichsel 11 angreifendes bzw. mit der Deichsel 11 fest verbundenes Verteilergetriebe 20 gekoppelt. Über das Verteilergetriebe 20 können mehrere an der Deichsel 11 angreifende bzw. mit der Deichsel 11 fest verbundene Hydraulikpumpen 21 angetrieben werden, um die hydraulischen Einrichtungen (nicht gezeigt) der landwirtschaftlichen Erntevorrichtung 10 mit Hydrauliköl zu versorgen.

Das Verteilergetriebe 20 weist dabei ein Getriebegehäuse 22 auf, wobei in dem Getriebegehäuse 22 Zahnräder 23, 24 angeordnet sind. Das Zahnrad 23 sitzt dabei direkt auf der Abtriebswelle 19 und kämmt in die Zahnräder 24 ein, die ihrerseits auf Wellen 25 der Hydraulikpumpen 21 sitzen.

Das Getriebegehäuse 22 des Verteilergetriebes 20 ist von Hydrauliköl durchströmt, nämlich stromabwärts eines nicht gezeigten Hydraulikölspeichers der landwirtschaftlichen Erntevorrichtung 10 und stromaufwärts der Hydraulikpumpen 21. Hydrauliköl kann über einen Schlauch bzw. eine Haupthydraulikleitung 26 aus dem nicht gezeigten Hydraulikölspeicher der landwirtschaftlichen Erntevorrichtung 10 entnommen werden, nämlich über die Hydraulikpumpen 21 angesaugt werden, um stromaufwärts der Hydraulikpumpen 21 über das Getriebegehäuse 22 des Verteilergetriebes 21 zu strömen. Zwischen dem Getriebegehäuse 22 des Verteilergetriebes 20 und den Hydraulikpumpen 21 erstrecken sich erste Schläuche bzw. Hydraulikleitungen 27. Zweite Schläuche bzw. Hydraulikleitungen 28 erstrecken sich von den Hydraulikpumpen 21 in Richtung auf die nicht gezeigten hydraulisch aktuierbaren Einrichtungen der landwirtschaftlichen Erntevorrichtung 10.

Die am Winkelgetriebe 18 angreifende Gelenkwelle 17 verläuft vorzugsweise senkrecht zu der ebenfalls am Winkelgetriebe 18 sowie am Verteilergetriebe 20 angreifenden Abtriebswelle 19.

Wie am besten Fig. 3 entnommen werden kann, verläuft die am Winkelgetriebe 18 angreifende Abtriebswelle 19 koaxial zur Schwenkachse 14 zwischen der Deichsel 11 und dem Ankoppelbock 12.

Im gezeigten Ausführungsbeispiel sind die Hydraulikpumpen 21 unterhalb des Getriebegehäuses 22 und damit unterhalb des Verteilergetriebes 20 an der Deichsel 11 befestigt.

Im Betrieb ergeben sich keine Relativbewegungen zwischen den Hydraulikpumpen 21, Schläuchen bzw. Hydraulikleitungen 26, 27, 28 sowie der Deichsel 11.

Wie bereits ausgeführt, dient das Getriebegehäuse 22 einerseits der Aufnahme der Zahnräder 23, 24 des Verteilergetriebes 20 und andererseits der Durchströmung und Aufteilung des aus dem Hydraulikölspeicher (nicht gezeigt) der landwirtschaftlichen Erntevorrichtung 10 entnommenen Hydrauliköls in Richtung auf die Hydraulikpumpen 21. Dabei weist das Getriebegehäuse 22 des Verteilergetriebes 20 vorzugsweise eine erste Kammer auf, in der die Zahnräder 23, 24 angeordnet sind, ferner eine zweite Kammer, die vom Hydrauliköl stromaufwärts der Hydraulikpumpen 21 durchströmt ist.

Zur Aufteilung bzw. Verteilung des Hydrauliköls an die Hydraulikpumpen 21 weist das Getriebegehäuse 22 in diesem Ausführungsbeispiel vier Ausgänge auf, die jeweils über Hydraulikleitungen in Form von Rohren oder Schläuchen mit einer Hydraulikpumpe 21 strömungstechnisch verbunden sind.

In einer ersten Variante können die erste Kammer des Getriebegehäuses 22, die der Aufnahme der Zahnräder 23, 24 des Verteilergetriebes 20 dient, und die zweite Kammer des Getriebegehäuses 22, die vom Hydrauliköl durchströmt ist, strömungsseitig getrennt sein.

In einer zweiten, bevorzugten Variante sind die erste Kammer des Getriebegehäuses 22 des Verteilergetriebes 20 und die zweite Kammer des Getriebegehäuses 22 des Verteilergetriebes 20 strömungsseitig gekoppelt, derart, dass das über das Getriebegehäuse 22 des Verteilergetriebes 20 zu den Hydraulikpumpen 21 strömende und ausgehend von dem Getriebegehäuse 22 auf die Hydraulikpumpen 21 verteilte Hydrauliköl zur Kühlung und/oder Schmierung des Verteilergetriebes 20 über die Zahnräder 23, 24 des Verteilergetriebes 20 strömt.

Bei der erfindungsgemäßen landwirtschaftlichen Erntevorrichtung 10 sind demnach die Hydraulikpumpen 21 vorteilhaft mit Hydrauliköl versorgbar, ferner ausgehend von den Hydraulikpumpen 21 nicht gezeigte hydraulisch aktuierbare Einrichtungen der Erntevorrichtung 10. Das Verteilergetriebe 20, welches an der Deichsel 11 befestigt ist, dient nicht nur dem mechanischen Antreiben der Hydraulikpumpen 21, sondern vielmehr auch der Verteilung des Hydrauliköls in Richtung auf die Hydraulikpumpen 21. Die Hydraulikpumpen 21 und Hydraulikleitungen 26, 27 und 28 bzw. Schläuche sind ortsfest an der Deichsel 11 befestigt. Das Winkelgetriebe 18 ist am Ankoppelbock 12 befestigt. Wie bereits ausgeführt, sind die Hydraulikpumpen 21 vorzugsweise unterhalb des Verteilergetriebes 20 angeordnet.

Mithilfe der Erfindung kann eine Vielzahl von Hydraulikpumpen 21 einer landwirtschaftlichen Erntevorrichtung 10 zuverlässig betrieben werden, ferner können über die Hydraulikpumpen 21 eine Vielzahl hydraulisch aktuierbarer Einrichtungen zuverlässig mit Hydrauliköl versorgt werden. Die gesamte Anordnung ist platzsparend und vermeidet eine Relativbewegung von Schläuchen bzw. Hydraulikleitungen 26, 27, 28 beim Bewegen der Deichsel 11 relativ zum Ankoppelbock 12.

Bei Bedarf könnten die im Ausführungsbeispiel gezeigten vier Hydraulikpumpen 21 um weitere Hydraulikpumpen ergänzt oder auch auf weniger Pumpen reduziert werden.

In das Verteilergetriebe 20 können Temperatursensoren, Drehzahlsensoren oder andere Sensoren zur Messung von Ölparametern sowie Einrichtungen zur Kühlung des Hydrauliköls oder Getriebeöls integriert sein.

Bei der landwirtschaftlichen Erntevorrichtung 10 handelt es sich vorzugsweise um eine Futtererntemaschine, insbesondere um einen Merger oder Pickup-Band-Schwader. Ein Merger oder Pickup-Band-Schwader verfügt über mehrere über Hydraulikmotoren anzutreibende Pickups sowie über mehrere über Hydraulikmotoren anzutreibende Bandförderer. Diese Hydraulikmotoren können mithilfe der Erfindung zuverlässig mit Hydrauliköl versorgt werden.

### Bezugszeichenliste

- 10: Erntevorrichtung
- 11: Deichsel
- 11a: Ende
- 11b: Ende
- 12: Ankoppelbock
- 13: Flansch
- 14: Schwenkachse
- 15: Lasche
- 16: Aufnahmetasche
- 17: Gelenkwelle
- 18: Winkelgetriebe
- 19: Abtriebswelle
- 20: Verteilergetriebe
- 21: Hydraulikpumpe
- 22: Gehäuse
- 23: Zahnrad
- 24: Zahnrad
- 25: Welle
- 26: Haupthydraulikleitung/Schlauch
- 27: Hydraulikleitung/Schlauch
- 28: Hydraulikleitung/Schlauch
- 29: Achse

## Patentansprüche

1. Landwirtschaftliche Erntevorrichtung (10),
mit einer Deichsel (11), die an einen Rahmen oder ein Gestell der Erntevorrichtung (10), an welchem mehrere hydraulisch aktuierbare Einrichtungen wie Hydraulikzylinder und/oder Hydraulikmotoren angreifen, koppelbar ist,
mit einem Ankoppelbock (12), über welchen die Erntevorrichtung (10) an ein Zugfahrzeug zum ziehenden Fortbewegen durch das Zugfahrzeug koppelbar ist, wobei die Deichsel (11) gegenüber dem Ankoppelbock (12) um eine Schwenkachse (14) schwenkbar ist,
mit einem am Ankoppelbock (12) angreifenden Winkelgetriebe (18), welches antriebsseitig über eine Gelenkwelle (17) an eine Zapfwelle des Zugfahrzeugs ankoppelbar ist, und welches abtriebsseitig über eine Abtriebswelle (19) an ein an der Deichsel (11) angreifendes Verteilergetriebe (20) gekoppelt ist, über welches mehrere an der Deichsel (11) angreifende Hydraulikpumpen (21) antreibbar sind, um die hydraulisch aktuierbaren Einrichtungen mit Hydrauliköl zu versorgen,
wobei das Verteilergetriebe (20) ein Getriebegehäuse (22) aufweist, wobei in dem Getriebegehäuse (22) Zahnräder (23, 24) des Verteilergetriebes (20) angeordnet sind, und wobei das Getriebegehäuse (22) von Hydrauliköl durchströmbar ist, nämlich stromabwärts eines Hydraulikölspeichers und stromaufwärts der Hydraulikpumpen (21).

2. Landwirtschaftliche Erntevorrichtung (10) nach Anspruch 1, **dadurch gekennzeichnet, dass** das Getriebegehäuse (22) des Verteilergetriebes (20) eine erste Kammer aufweist, in der Zahnräder (23, 24) des Verteilergetriebes angeordnet sind, und dass das Getriebegehäuse (22) des Verteilergetriebes (20) eine zweite Kammer aufweist, die von Hydrauliköl durchströmbar ist.

3. Landwirtschaftliche Erntevorrichtung (10) nach Anspruch 2, **dadurch gekennzeichnet, dass** das Getriebegehäuse (22), insbesondere die von Hydrauliköl durchströmbare zweite Kammer, für jede Hydraulikölpumpe (21) einen separaten Ausgang für Hydrauliköl aufweist, der jeweils über eine Hydraulikleitung mit einer Hydraulikpumpe (21) strömungstechnisch verbunden ist.

4. Landwirtschaftliche Erntevorrichtung (10) nach Anspruch 2 oder 3, **dadurch gekennzeichnet, dass** die erste Kammer des Getriebegehäuse (22) des Verteilergetriebes (20) und die zweite Kammer des Getriebegehäuse (22) des Verteilergetriebes (20) strömungsseitig getrennt sind.

5. Landwirtschaftliche Erntevorrichtung (10) nach Anspruch 2 oder 3, **dadurch gekennzeichnet, dass** die erste Kammer des Getriebegehäuse (22) des Verteilergetriebes (20) und die zweite Kammer des Getriebegehäuse (22) des Verteilergetriebes (20) strömungsseitig gekoppelt sind.

6. Landwirtschaftliche Erntevorrichtung (10) nach Anspruch 5, **dadurch gekennzeichnet, dass** das über das Getriebegehäuse (22) des Verteilergetriebes (20) zu den Hydraulikpumpen (21) strömende und ausgehend von dem Getriebegehäuse (22) auf die Hydraulikpumpen (21) verteilte Hydrauliköl zur Kühlung und/oder Schmierung des Verteilergetriebes (20) über die Zahnräder (23, 24) des Verteilergetriebes (20) strömt.

7. Landwirtschaftliche Erntevorrichtung (10) nach einem der Ansprüche 1 bis 6, **dadurch gekennzeichnet, dass** die am Winkelgetriebe (18) angreifende Gelenkwelle (17) senkrecht zu der am Winkelgetriebe (18) angreifenden Abtriebswelle (19) verläuft.

8. Landwirtschaftliche Erntevorrichtung (10) nach einem der Ansprüche 1 bis 7, **dadurch gekennzeichnet, dass** die am Winkelgetriebe (18) angreifenden Abtriebswelle (19) koaxial zur Schwenkachse (14) zwischen Deichsel (11) und Ankoppelbock (12) verläuft.

9. Landwirtschaftliche Erntevorrichtung (10) nach einem der Ansprüche 1 bis 8, **dadurch gekennzeichnet, dass** die Hydraulikpumpen (21) unterhalb des Getriebegehäuses (22) des Verteilergetriebes (20) an der Deichsel (11) angreifen.

10. Landwirtschaftliche Erntevorrichtung (10) nach einem der Ansprüche 1 bis 9, **dadurch gekennzeichnet, dass** dieselbe eine Futtererntemaschine ist.

11. Landwirtschaftliche Erntevorrichtung (10) nach Anspruch 9, **dadurch gekennzeichnet, dass** die Futtererntemaschine ein Merger oder Pickup-Band-Schwader ist.
